# FASCICULE DE BREVET EUROPEEN

(11) **EP 1 440 668 B1**
(45) Date de publication et mention de la délivrance du brevet: **28.12.2005**
(21) Numéro de dépôt: 03001416.1
(22) Date de dépôt: 22.01.2003
(51) Int. Cl.: A61C 5/02

(54) **Instrument dentaire pour l'extraction d'un objet d'un canal radiculaire**
Dentales Werkzeug zum entfernen eines Gegenstands aus einem Zahnwurzelkanal
Dental tool for removing an object from a dental root canal

(43) Date de publication de la demande: 28.07.2004
(73) Titulaire: Maillefer Instruments Holding S.A.R.L., 1338 Ballaigues (CH)
(72) Inventeur: Aeby, François, 1442 Montagny (CH); Rota, Gilbert, 25160 Vaux et Chantegrue (FR)
(74) Mandataire: Micheli & Cie

(56) Documents cités:
- DE-A- 10 023 195
- FR-A- 1 213 369

## Description

La présente invention concerne un instrument dentaire pour l'extraction d'un objet, notamment un instrument dentaire cassé, d'un canal radiculaire.

Les traitements de racines dentaires, appelés traitements endodontiques, sont de plus en plus réalisés par une instrumentation mécanisée. Il y a quelques années, le dentiste faisait appel à une série de limes manuelles, de préférence an acier inoxydable, qu'il utilisait par des mouvements rotatifs en alternance avec des mouvements axiaux. Aujourd'hui, la tendance est d'utiliser une succession de limes rotatives en nickel-titane, selon une séquence définie. Cette technique permet de nettoyer le canal radiculaire en respectant le trajet canalaire originel, dans un minimum de temps et en respectant les principes de base de l'endodontie. La sécurité d'utilisation de ces instruments dépend beaucoup du cas clinique, de la formation du dentiste et bien sûr des conditions d'utilisation. Ce dernier point est important pour le fabricant de l'instrument. Les conditions d'utilisation sont liées à la pression exercée dans le canal ainsi qu'à la taille, à la vitesse de rotation et au temps d'utilisation de l'instrument. Les traitements endodontiques ne se font pas toujours dans des canaux droits. Il existe des cas où les courbures du trajet canalaire sont importantes et d'autres où les accès sont difficiles. Enfin, certains canaux présentent des calcifications. Toutes ces difficultés peuvent provoquer des ruptures d'instruments. La bonne pratique de l'art dentaire demande au praticien de retirer ces instruments cassés.

Plusieurs techniques ont été proposées pour retirer d'un canal radiculaire dentaire des bouts d'instruments cassés. On connaît notamment, par les documents G 92 03 692.9 et DE 100 23 195, des instruments d'extraction comportant une tige terminée par une pince permettant de saisir un instrument cassé dans un canal radiculaire dentaire. La pince est constituée de bras élastiques qui peuvent être mis et maintenus dans une position de pincement de l'instrument cassé par un système de contrainte consistant en un manchon mobile par rapport à la tige et qui, lorsqu'il est déplacé dans un sens déterminé, exerce une pression sur les bras élastiques.

Du fait de la présence de ce système de contrainte, ces instruments d'extraction sont relativement compliqués. Ils sont également délicats à manipuler car le manchon peut gêner l'accès en bouche.

La présente invention vise à remédier à ces inconvénients et propose, pour ce faire, un instrument dentaire pour l'extraction d'un objet d'un canal radiculaire, comprenant une tige ayant une partie d'extrémité ouverte destinée à recevoir au moins une partie de l'objet, cette partie d'extrémité ouverte pouvant être déformée pour permettre le saisissement de l'objet par pincement puis son extraction du canal radiculaire, caractérisé en ce que la partie d'extrémité ouverte est tubulaire et est apte à se déformer plastiquement, d'une manière qui entraîne une réduction de sa section interne, sous l'effet d'une contrainte déterminée.

Ainsi, dans la présente invention, grâce à la forme tubulaire de la partie d'extrémité ouverte et à l'aptitude de celle-ci à se déformer plastiquement, aucun système de mise et de maintien en position de pincement n'est nécessaire. La déformation plastique est mise en oeuvre directement par le praticien, typiquement en appliquant la contrainte déterminée depuis une extrémité de l'instrument opposée à la partie d'extrémité ouverte et d'une façon telle que cette contrainte déterminée aille à l'encontre d'une force de réaction exercée par la dentine sur la partie d'extrémité ouverte. La contrainte déterminée est par exemple une torsion, exercée lorsque la partie d'extrémité ouverte est bloquée en rotation dans la dentine, au moins dans le sens de la torsion, ou une pression axiale, exercée lorsque la partie d'extrémité ouverte est en butée axiale dans la dentine. On notera qu'outre sa simplicité, l'instrument d'extraction selon l'invention a pour avantage de pouvoir exercer un effort de pincement important, permettant de libérer des instruments cassés bloqués dans le canal radiculaire, même lorsque la partie d'extrémité ouverte présente une faible épaisseur de paroi.

Des modes de réalisation particuliers de l'invention sont définis dans les revendications annexées 3 à 18.

D'autres avantages et caractéristiques de l'invention apparaîtront à la lecture de la description détaillée suivante faite en référence aux dessins annexés dans lesquels :
- les figures 1A et 1B montrent respectivement en vue de profil et en perspective un instrument dentaire selon un premier mode de réalisation de l'invention ;
- les figures 2A à 2F sont des vues en coupe schématiques montrant un procédé d'extraction d'un instrument cassé d'un canal radiculaire dentaire, utilisant l'instrument représenté aux figures 1A et 1B ; et
- les figures 3 à 15 sont des vues de profil (partiellement coupées en ce qui concerne les figures 13 à 15) montrant des instruments dentaires selon d'autres modes de réalisation de l'invention.

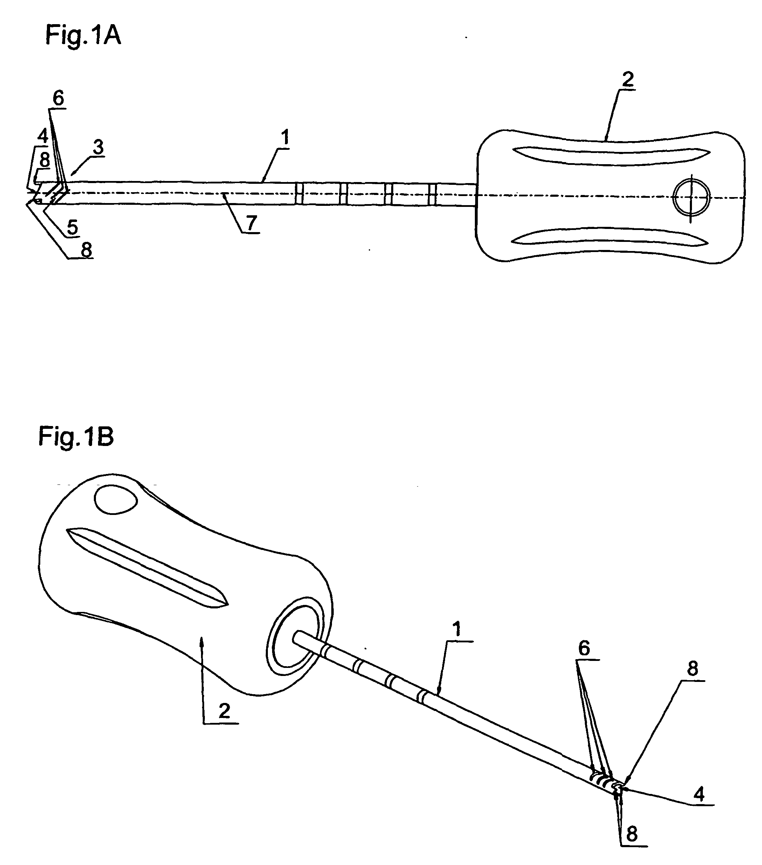

En référence aux figures 1A et 1B, un instrument dentaire pour l'extraction d'un objet, notamment un instrument cassé, d'un canal radiculaire comprend une tige tubulaire 1 et un manche 2 solidaires l'un de l'autre. La partie d'extrémité distale 3 de la tige 1, opposée au manche 2, est ouverte au niveau de sa face frontale 4 pour permettre le passage à l'intérieur de la tige 1 d'une extrémité de l'objet à extraire.

La partie d'extrémité distale 3 comporte en outre, à proximité de la face frontale ouverte 4, une zone dite « affaiblie » 5 présentant sur sa surface extérieure des ouvertures oblongues 6, de préférence traversantes. Dans l'exemple illustré, la zone 5 comporte trois séries de trois ouvertures inclinées à 45° par rapport à l'axe 7 de la tige 1. Pour des raisons de commodité, une seule de ces séries a été représentée. Ces trois séries sont identiques et réparties uniformément (à 120°) sur la périphérie de la zone 5. Ces ouvertures 6 permettent à la partie d'extrémité distale 3 de se déformer plastiquement, c'est-à-dire de façon non élastique, et d'une manière qui entraîne une réduction de la section interne de la zone 5, sous l'effet d'une contrainte de torsion appliquée à la tige 1.

La partie d'extrémité distale 3 comporte également sur la face frontale 4, régulièrement répartis autour de l'ouverture de cette dernière, des dents 8, au nombre de trois dans l'exemple illustré, permettant d'ancrer la tige 1 dans la dentine pour bloquer l'instrument en rotation lors de la torsion précitée.

La tige 1 est typiquement réalisée en acier inoxydable. Toutefois, d'autres matériaux, en particulier métalliques, peuvent convenir, à condition qu'ils puissent subir une déformation permanente non élastique.

L'épaisseur de la paroi de la tige 1 est très faible, typiquement de 0,1 mm.

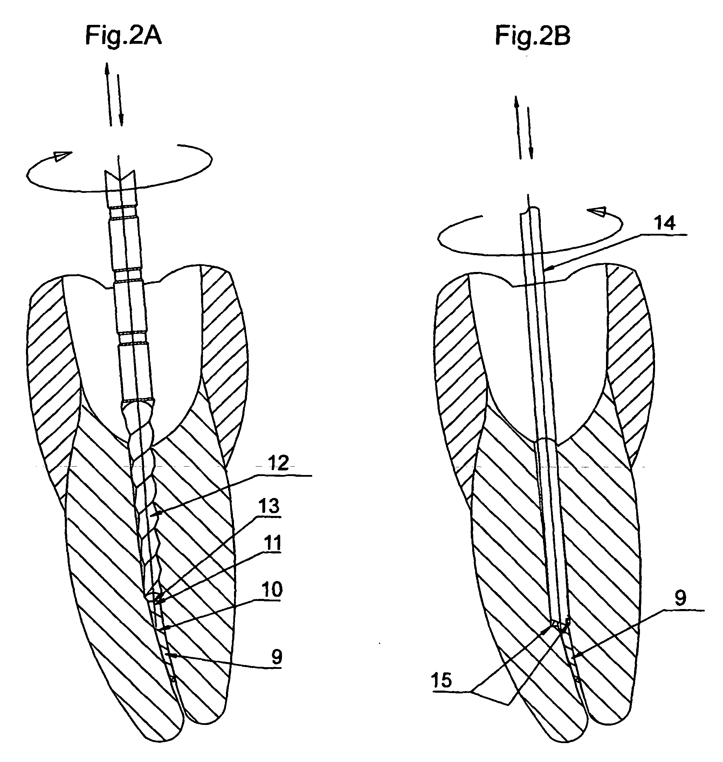

Les figures 2A à 2F montrent un procédé d'extraction d'un instrument cassé d'un canal radiculaire, utilisant l'instrument représenté aux figures 1A et 1B. Dans l'exemple illustré, l'instrument cassé logé dans le canal radiculaire est une lime 9 comportant sur sa surface extérieure une arête hélicoïdale 10.

Une première étape du procédé consiste à déterminer le diamètre de l'extrémité supérieure, désignée par 11, de la partie d'instrument cassé 9 restée dans le canal en mesurant le diamètre de l'extrémité correspondante de la partie d'instrument cassé resté en dehors de la bouche, puis à choisir un instrument d'extraction dont le diamètre interne de la tige 1 est légèrement supérieur au diamètre ainsi déterminé.

Ensuite, comme représenté à la figure 2A, l'on élargit le canal radiculaire jusqu'à l'extrémité supérieure 11 de l'instrument cassé au moyen d'une fraise 12 ayant un diamètre sensiblement égal au diamètre externe de la tige 1 de l'instrument d'extraction et dont l'extrémité distale, 13, est plane. La figure 2A montre la fin de cette étape où l'extrémité plane 13 de la fraise 12 vient buter contre l'extrémité supérieure 11 de l'instrument cassé. L'espace ainsi créé dans le canal permettra à l'instrument d'extraction de se guider vers l'instrument cassé sans risque de fausse route et de se présenter centré par rapport à cet instrument cassé.

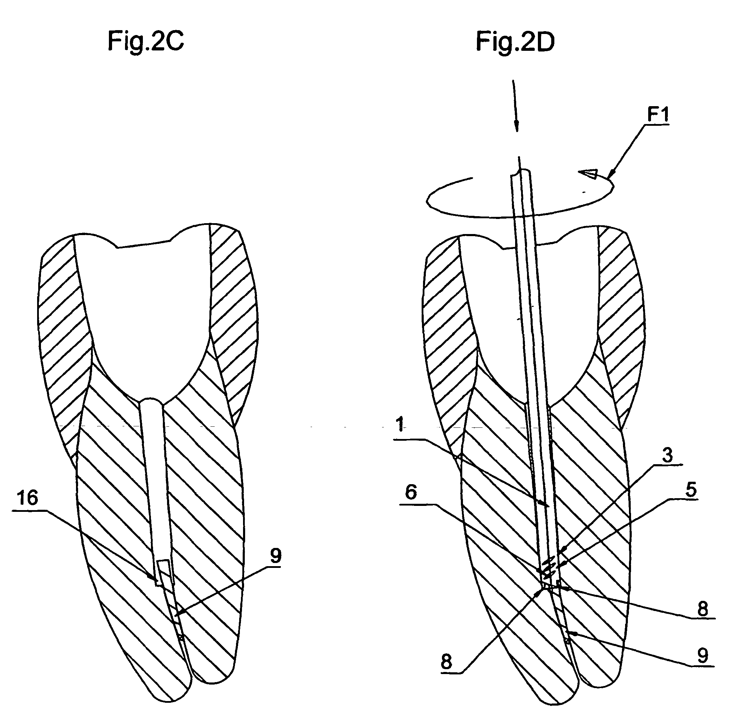

Un espace est ensuite dégagé autour de l'extrémité supérieure 11 de l'instrument cassé, à l'aide d'un trépan 14 comportant des dents 15 sur sa face frontale et dont le diamètre est sensiblement égal au diamètre externe de la tige 1 de l'instrument d'extraction (figure 2B). La figure 2C montre l'espace obtenu, désigné par 16, une fois le trépan 14 retiré.

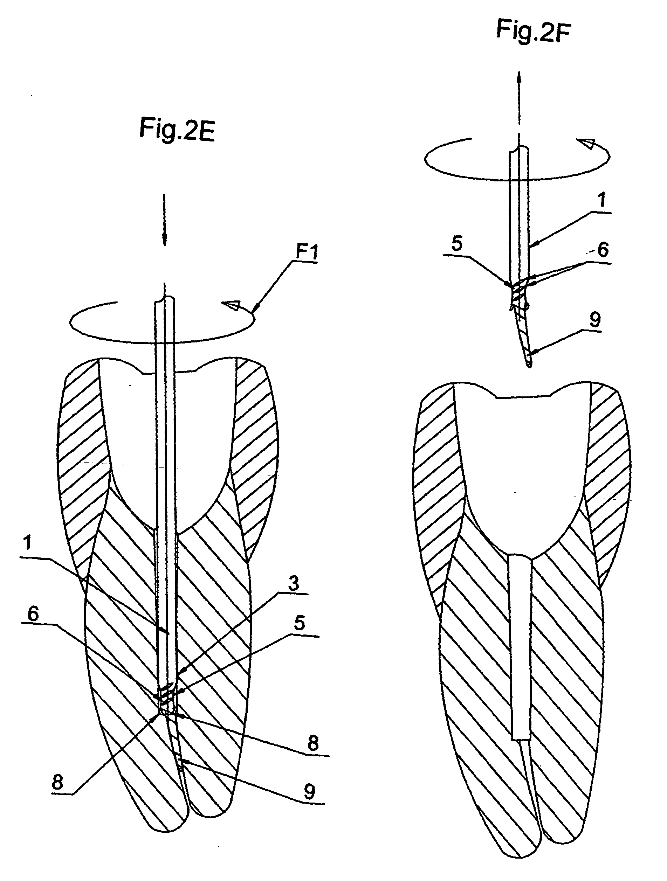

Enfin, l'on fait pénétrer l'instrument d'extraction dans le canal radiculaire jusqu'à ce que sa partie d'extrémité distale 3 soit logée dans l'espace 16 et entoure ainsi l'extrémité supérieure 11 de l'instrument cassé (figure 2D). Par un mouvement axial rapide imprimé manuellement à l'instrument d'extraction par l'intermédiaire de son manche 2, l'on plante les dents 8 de la tige 1 dans la dentine de façon à les bloquer en rotation. Puis en appliquant une contrainte de torsion à la tige 1 dans le sens indiqué par la flèche F1, également par l'intermédiaire du manche 2, l'on déforme la partie d'extrémité distale 3 pour réduire sa section interne et ainsi saisir par pincement l'extrémité supérieure 11 de l'instrument cassé (figure 2E). Grâce à cette déformation plastique, la partie d'extrémité 3 reste dans son état déformé après l'application de la contrainte de torsion et maintient donc son effort de pincement sans qu'il soit nécessaire de prévoir un système de blocage particulier. L'instrument cassé ainsi saisi, l'on peut le retirer en le faisant tourner dans son sens de dévissage (figure 2F), qui correspond au sens précité F1 de torsion de la tige 1. L'instrument d'extraction, avec l'instrument cassé auquel il reste lié, est ensuite jeté.

Dans une variante du procédé d'extraction, le trépan 14 est l'instrument d'extraction 1-2 lui-même, c'est-à-dire que l'on utilise l'instrument d'extraction, avec ses dents 8, pour créer l'espace 16 autour de l'extrémité supérieure 11 de l'instrument cassé. Pour ce faire, l'on creuse dans la dentine par un mouvement de rotation et de pression axiale suffisamment lent pour ne pas entraîner de déformation de la partie d'extrémité distale 3. Une fois l'espace 16 créé, l'on applique un mouvement plus rapide à l'instrument pour provoquer la torsion et donc le pincement de l'objet 9 (figure 2E).

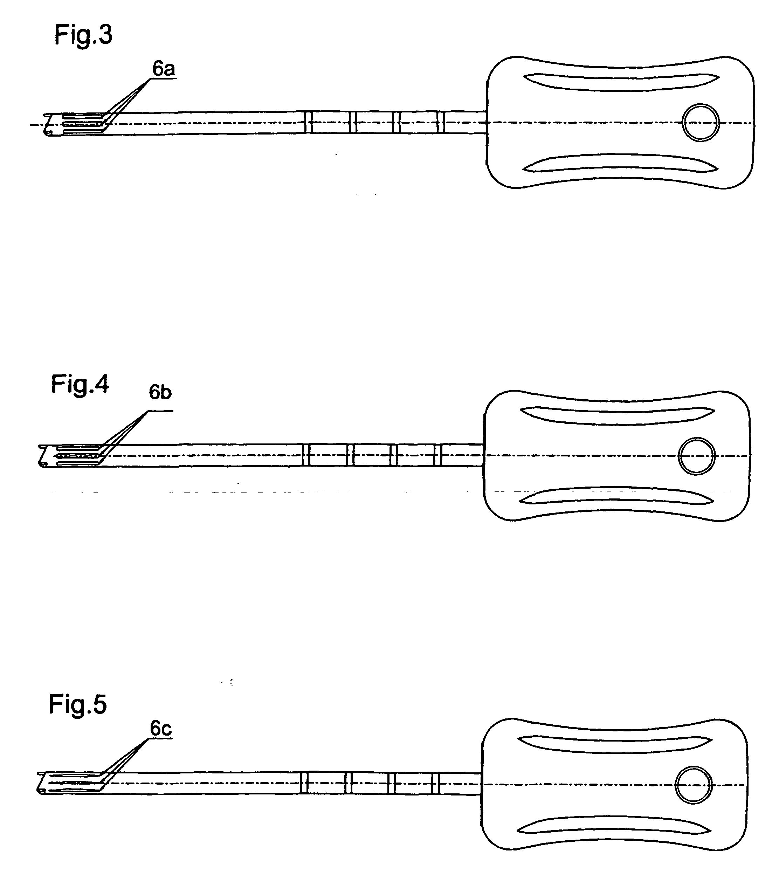

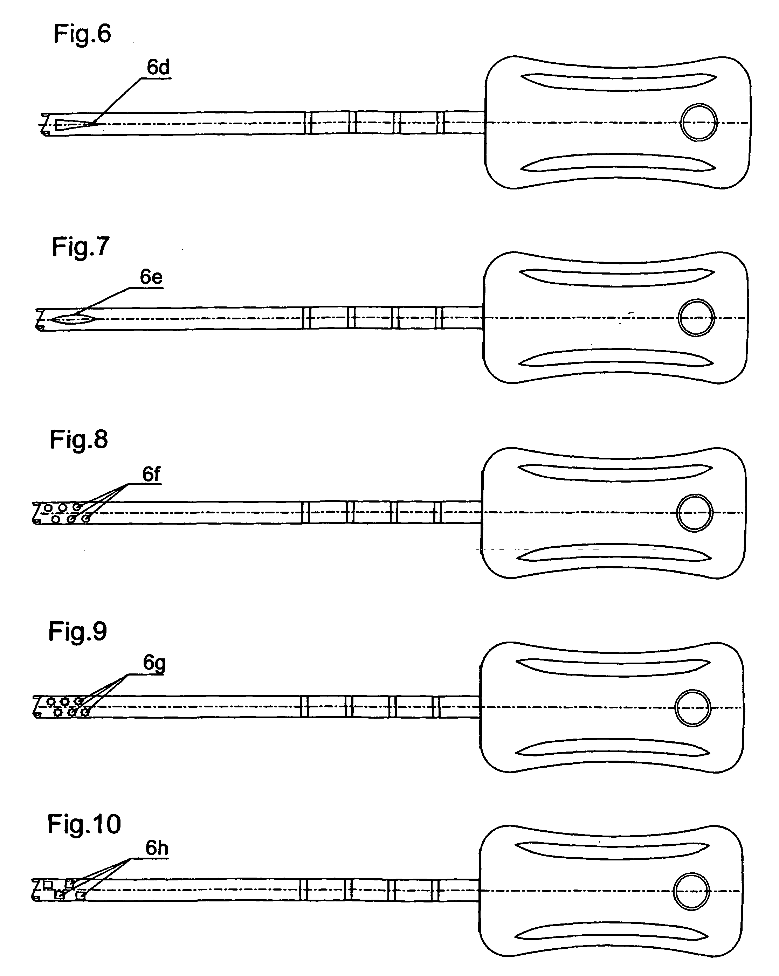

Les figures 3 à 13 montrent des instruments d'extraction selon d'autres modes de réalisation de l'invention, pouvant être utilisés dans un même procédé que celui décrit ci-dessus. Dans les exemples des figures 3 à 7, les ouvertures de déformation oblongues ne sont pas inclinées, comme dans l'exemple des figures 1A et 1B, mais parallèles à l'axe de la tige 1. Ces ouvertures oblongues peuvent avoir différentes formes, par exemple rectangulaire (figure 3, repère 6a), rectangulaire à bords arrondis (figure 4, repère 6b), en amande (figures 5 et 7, repères 6c et 6e) ou triangulaire (figure 6, repère 6d). Le nombre de ces ouvertures peut varier et être par exemple égal à neuf (trois séries de trois ouvertures, uniformément réparties le long de la périphérie de la partie d'extrémité distale ; figures 3-5) ou à trois (trois ouvertures uniformément réparties le long de la périphérie de la partie d'extrémité distale ; figures 6, 7). Les ouvertures de déformation peuvent également être constituées de trous de forme variable, par exemple ronde, en étoile ou carrée, disposés en quinconce (figures 8-10, repères 6f-6h).

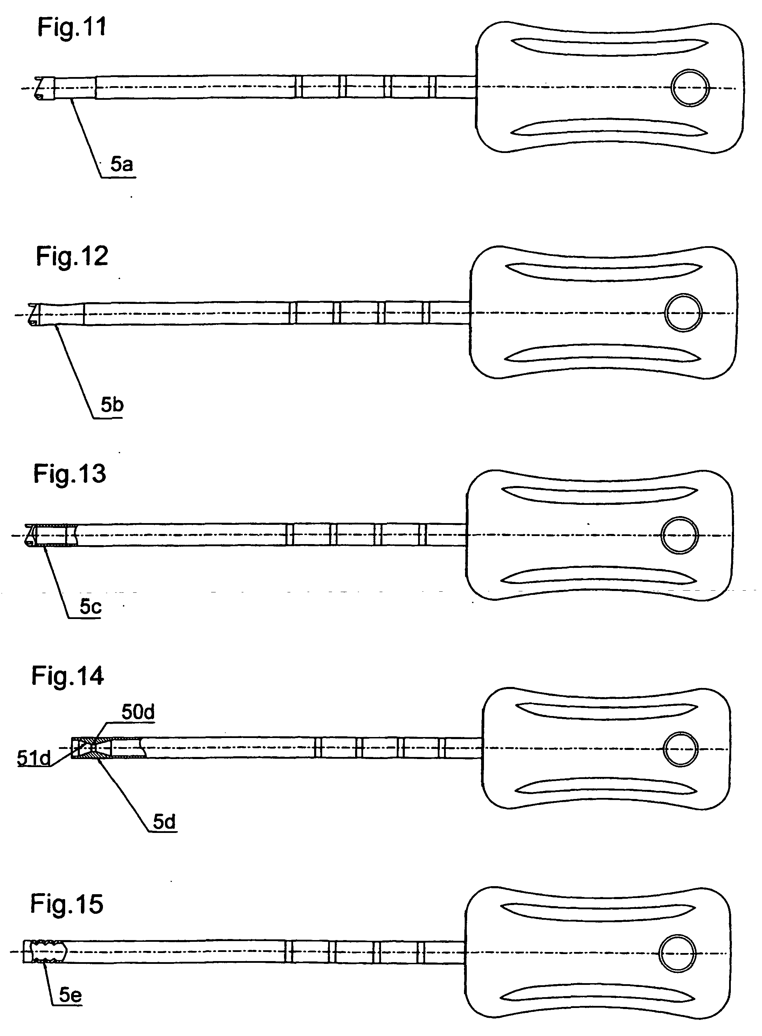

Selon une autre variante, représentée à la figure 11, la partie d'extrémité distale de la tige de l'instrument comporte, en lieu et place des ouvertures de déformation, une zone 5a à épaisseur de paroi réduite par rapport au reste de la tige. Cette zone à épaisseur de paroi réduite a le même diamètre interne que le reste de la tige. Comme dans les exemples précédents, cette zone constitue une zone affaiblie qui, sous l'effet d'une contrainte de torsion, se déforme d'une manière entraînant une réduction de sa section interne.

La figure 12 illustre un instrument d'extraction basé sur le même principe que celui de la figure 11, mais dans lequel l'épaisseur de la paroi de la zone affaiblie 5b est variable et présente un minimum dans la partie centrale de la zone 5b.

Dans l'exemple de la figure 13, la zone affaiblie 5c a la même épaisseur de paroi et le même diamètre interne que le reste de la tige, mais est réalisée en une matière plus malléable que celle dans laquelle est faite le reste de la tige. La zone affaiblie 5c est par exemple réalisée en cuivre et le reste de la tige en acier inoxydable. La zone affaiblie 5c est fixée au reste de la tige par exemple par soudage ou brasage.

Dans une autre variante (non représentée), la zone affaiblie est constituée par une zone de la partie d'extrémité distale de la tige préalablement traitée thermiquement pour la rendre plus malléable que le reste de la tige.

La figure 14 montre un autre mode de réalisation, dans lequel la zone affaiblie 5d comporte sur sa surface interne un rétrécissement 50d définissant un cône 51d évasé vers l'ouverture de la partie d'extrémité distale et dont la fonction est de venir se coincer autour de l'extrémité supérieure de l'instrument cassé à la manière d'un cône Morse. Ce cône 51d peut ainsi servir de moyen de blocage en rotation de l'extrémité distale de la tige de l'instrument, en lieu et place des dents 8, dans le cas où l'instrument cassé est lui-même bloqué en rotation dans le canal.

La figure 15 montre encore un autre mode de réalisation, dans lequel, à la différence de tous les modes de réalisation décrits ci-dessus, la zone affaiblie 5e est conçue pour se déformer sous l'action non pas d'une contrainte en torsion mais d'une contrainte en pression axiale, exercée manuellement par l'intermédiaire du manche de l'instrument lorsque la tige est en butée axiale dans l'espace dégagé autour de l'extrémité supérieure de l'instrument cassé. A cet effet, la zone affaiblie 5e comporte une paroi en zigzag qui, sous l'action de la pression axiale, se comprime, réduisant ainsi la section interne de la zone affaiblie.

## Revendications

1. Instrument dentaire pour l'extraction d'un objet d'un canal radiculaire, comprenant une tige (1) ayant une partie d'extrémité ouverte (3) destinée à recevoir au moins une partie de l'objet (9), cette partie d'extrémité ouverte (3) pouvant être déformée pour permettre le saisissement de l'objet (9) par pincement puis son extraction du canal radiculaire, **caractérisé en ce que** la partie d'extrémité ouverte (3) est tubulaire et est apte à se déformer plastiquement, d'une manière qui entraîne une réduction de sa section interne, sous l'effet d'une contrainte déterminée.

2. Instrument dentaire selon la revendication 1, **caractérisé en ce que** la contrainte déterminée est une torsion.

3. Instrument dentaire selon la revendication 2, **caractérisé en ce que** la paroi de la partie d'extrémité ouverte (3) présente dans une zone déterminée, constituant une zone affaiblie (5) destinée à subir la déformation plastique, au moins une ouverture de déformation (6).

4. Instrument dentaire selon la revendication 3, **caractérisé en ce que** la ou les ouvertures de déformation (6) sont traversantes.

5. Instrument dentaire selon la revendication 3 ou 4, **caractérisé en ce que** la paroi de la partie d'extrémité ouverte (3) présente dans la zone déterminée des ouvertures de déformation (6) inclinées à 45° par rapport à l'axe (7) de la tige (1).

6. Instrument dentaire selon la revendication 5, **caractérisé en ce que** la paroi de la partie d'extrémité ouverte (3) présente dans la zone déterminée trois séries, uniformément réparties le long de la périphérie de la partie d'extrémité ouverte (3), de trois ouvertures de déformation (6) inclinées à 45° par rapport à l'axe (7) de la tige (1).

7. Instrument dentaire selon la revendication 3 ou 4, **caractérisé en ce que** la paroi de la partie d'extrémité ouverte présente dans la zone déterminée des ouvertures de déformation oblongues (6a-6e) parallèles à l'axe de la tige.

8. Instrument dentaire selon la revendication 3 ou 4, **caractérisé en ce que** la paroi de la partie d'extrémité ouverte présente dans la zone déterminée des trous de déformation (6f-6h) disposés en quinconce.

9. Instrument dentaire selon la revendication 2, **caractérisé en ce que** la paroi de la partie d'extrémité ouverte comprend une zone (5a ; 5b) à épaisseur réduite par rapport au reste de la tige, cette zone (5a ; 5b) constituant une zone affaiblie destinée à subir la déformation plastique.

10. Instrument dentaire selon la revendication 2, **caractérisé en ce que** la partie d'extrémité ouverte comprend une zone (5c) réalisée en un matériau moins dur que le matériau dans lequel est réalisé le reste de la tige, cette zone (5c) constituant une zone affaiblie destinée à subir la déformation plastique.

11. Instrument dentaire selon la revendication 2, **caractérisé en ce que** la partie d'extrémité ouverte comprend une zone préalablement traitée thermiquement pour la rendre moins résistante que le reste de la tige, cette zone constituant une zone affaiblie destinée à subir la déformation plastique.

12. Instrument dentaire selon l'une quelconque des revendications 2 à 11, **caractérisé en ce qu'**il comprend des moyens (8) pour bloquer en rotation la partie d'extrémité ouverte (3) dans la dentine, au moins dans le sens de la torsion, lors de l'application de la torsion.

13. Instrument dentaire selon la revendication 12, **caractérisé en ce que** lesdits moyens de blocage comprennent des dents (8) situées sur la face frontale (4) de la partie d'extrémité ouverte (3).

14. Instrument dentaire selon la revendication 12, **caractérisé en ce que** lesdits moyens de blocage comprennent une portion de surface interne de la partie d'extrémité ouverte, cette portion de surface interne présentant une forme conique (51d) évasée vers l'ouverture de la partie d'extrémité ouverte de façon à pouvoir venir se coincer autour d'une extrémité de l'objet.

15. Instrument dentaire selon la revendication 1, **caractérisé en ce que** la contrainte déterminée est une pression axiale.

16. Instrument dentaire selon la revendication 15, **caractérisé en ce que** la partie d'extrémité ouverte comprend une zone (5e) à paroi en zigzag.

17. Instrument dentaire selon l'une quelconque des revendications 1 à 16, **caractérisé en ce qu'**il comprend des dents (8) situées sur la face frontale (4) de la partie d'extrémité ouverte (3), autour de l'ouverture de la partie d'extrémité ouverte (3), et pouvant servir à creuser dans la dentine.

18. Instrument dentaire selon l'une quelconque des revendications 1 à 17, **caractérisé en ce qu'**il comprend en outre un manche (2).

## Patentansprüche

1. Dentales Werkzeug zum Herausziehen eines Gegenstandes aus einem Zahnwurzelkanal, einen Schaft (1) umfassend, der einen offenen Endabschnitt (3) besitzt, der dafür bestimmt ist, zumindest einen Abschnitt des Gegenstandes (9) aufzunehmen, wobei sich dieser offene Endabschnitt (3) verformen lässt, um zu ermöglichen, dass der Gegenstand (9) durch Einschnürung erfasst und dann aus dem Zahnwurzelkanal herausgezogen wird, **dadurch gekennzeichnet, dass** der offene Endabschnitt (3) röhrenförmig und in der Lage ist, sich plastisch so zu verformen, dass unter der Einwirkung einer bestimmten Kraft eine Verringerung seines inneren Querschnitts erfolgt.

2. Dentales Werkzeug nach Anspruch 1, **dadurch gekennzeichnet, dass** die bestimmte Kraft eine Verdrehung ist.

3. Dentales Werkzeug nach Anspruch 2, **dadurch gekennzeichnet, dass** die Wandung des offenen Endabschnitts (3) in einem bestimmten Bereich, der eine geschwächte Zone (5) darstellt, die dafür bestimmt ist, die plastische Verformung zu erleiden, zumindest eine Verformungsöffnung (6) aufweist.

4. Dentales Werkzeug nach Anspruch 3, **dadurch gekennzeichnet, dass** die Verformungsöffnung(en) (6) durchgehend sind.

5. Dentales Werkzeug nach Anspruch 3 oder 4, **dadurch gekennzeichnet, dass** die Wandung des offenen Endabschnitts (3) in der bestimmten Zone Verformungsöffnungen (6) aufweist, die 45° gegen die Achse (7) des Schaftes (1) geneigt sind.

6. Dentales Werkzeug nach Anspruch 5, **dadurch gekennzeichnet, dass** die Wandung des offenen Endabschnitts (3) in der bestimmten Zone drei gleichmässig um die Peripherie des offenen Endabschnitts (3) herum verteilte Reihen von je drei Verformungsöffnungen (6) aufweist, die 45° gegen die Achse (7) des Schafts (1) geneigt sind.

7. Dentales Werkzeug nach Anspruch 3 oder 4, **dadurch gekennzeichnet, dass** die Wandung des offenen Endabschnitts in der bestimmten Zone längliche, parallel zur Achse des Schafts verlaufende Verformungsöffnungen (6a bis 6e) aufweist.

8. Dentales Werkzeug nach Anspruch 3 oder 4, **dadurch gekennzeichnet, dass** die Wandung des offenen Endabschnitts in der bestimmten Zone versetzt angeordnete Verformungslöcher (6f bis 6h) aufweist.

9. Dentales Werkzeug nach Anspruch 2, **dadurch gekennzeichnet, dass** die Wandung des offenen Endabschnitts eine Zone (5a; 5b) von gegenüber dem übrigen Schaft verringerter Dicke aufweist, wobei diese Zone (5a; 5b) eine geschwächte Zone darstellt, die dafür bestimmt ist, plastische Verformung zu erleiden.

10. Dentales Werkzeug nach Anspruch 2, **dadurch gekennzeichnet, dass** der offene Endabschnitt eine Zone (5c) umfasst, die aus einem Material gearbeitet ist, das weniger hart als das Material ist, aus dem der übrige Schaft gearbeitet ist, wobei diese Zone (5c) eine geschwächte Zone darstellt, die dafür bestimmt ist, plastische Verformung zu erleiden.

11. Dentales Werkzeug nach Anspruch 2, **dadurch gekennzeichnet, dass** der offene Endabschnitt eine Zone umfasst, die thermisch vorbehandelt ist, um weniger widerstandsfähig als der übrige Schaft zu sein, wobei diese Zone eine geschwächte Zone darstellt, die dafür bestimmt ist, plastische Verformung zu erleiden.

12. Dentales Werkzeug nach einem der Ansprüche 2 bis 11, **dadurch gekennzeichnet, dass** es Mittel (8) umfasst, um den offenen Endabschnitt (3) in seiner Drehung im Zahnbein zu blockieren, und zwar zumindest in Verdrehungsrichtung, wenn eine Verdrehung ausgeübt wird.

13. Dentales Werkzeug nach Anspruch 12, **dadurch gekennzeichnet, dass** die Blockiermittel Zähne (8) umfassen, die sich an der Stirnseite (4) des offenen Endabschnitts (3) befinden.

14. Dentales Werkzeug nach Anspruch 12, **dadurch gekennzeichnet, dass** die Blockiermittel einen Bereich der inneren Oberfläche des offenen Endabschnitts umfassen, wobei dieser Bereich der inneren Oberfläche eine sich zur Öffnung des offenen Endabschnitts hin aufweitende, konische Gestalt (51d) aufweist, so dass er ein Ende des Gegenstandes umklammern kann.

15. Dentales Werkzeug nach Anspruch 1, **dadurch gekennzeichnet, dass** die bestimmte Kraft ein Axialdruck ist.

16. Dentales Werkzeug nach Anspruch 15, **dadurch gekennzeichnet, dass** der offene Endabschnitt eine Zone (5e) mit zickzackförmiger Wandung umfasst.

17. Dentales Werkzeug nach einem der Ansprüche 1 bis 16, **dadurch gekennzeichnet, dass** es Zähne (8) umfasst, die sich um die Öffnung des offenen Endabschnitts (3) herum an der Stirnseite (4) des offenen Endabschnitts (3) befinden und dazu dienen können, im Zahnbein zu bohren.

18. Dentales Werkzeug nach einem der Ansprüche 1 bis 17, **dadurch gekennzeichnet, dass** es ausserdem einen Griff (2) umfasst.

## Claims

1. Dental tool for extracting an object from a dental root canal, comprising a shaft (1) having an open end segment (3) for receiving at least a segment of the object (9), this open end segment (3) being capable of being deformed for seizing the object (9) by nipping action and then extracting it from the root canal, **characterized in that** the open end segment (3) is tubular and capable of undergoing plastic deformation such that a reduction of its inner section is produced under the effect of a determined constraint.

2. Dental tool of claim 1, **characterized in that** the determined constraint is a torsion.

3. Dental tool of claim 2, **characterized in that** in a determined zone constituting a weakened zone (5) intended to undergo the plastic deformation, the wall of the open end segment (3) exhibits at least one deformation aperture (6).

4. Dental tool of claim 3, **characterized in that** the deformation aperture(s) are through-aperture(s).

5. Dental tool of claim 3 or 4, **characterized in that** in the determined zone, the wall of the open end segment (3) exhibits deformation apertures (6) having a 45° inclination relative to the axis (7) of the shaft (1).

6. Dental tool of claim 5, **characterized in that** in the determined zone the wall of the open end segment (3) has three series (3), uniformly distributed along the periphery of the open end segment (3), of deformation apertures (6) having a 45° inclination relative to the axis (7) of shaft (1).

7. Dental tool of claim 3 or 4, **characterized in that** in the determined zone, the wall of the open end segment has oblong deformation apertures (6a to 6e) parallel to the axis of the shaft.

8. Dental tool of claim 3 or 4, **characterized in that** in the determined zone, the wall of the open end segment exhibits deformation holes (6f to 6h) in a staggered arrangement.

9. Dental tool of claim 2, **characterized in that** the wall of the open end segment comprises a zone (5a; 5b) with a reduced thickness with respect to the remainder of the shaft, this zone (5a; 5b) constituting a weakened zone intended to undergo the plastic deformation.

10. Dental tool of claim 2, **characterized in that** the open end segment comprises a zone (5c) made from a material less hard than that from which the remainder of the shaft is made, this zone (5c) constituting a weakened zone intended to undergo the plastic deformation.

11. Dental tool of claim 2, **characterized in that** the open end segment comprises a zone that in advance has been thermally treated to become less resistant than the remainder of the shaft, this zone constituting a weakened zone intended to undergo the plastic deformation.

12. Dental tool of any one of claims 2 to 11, **characterized in that** it comprises means (8) for rotationally locking the open end segment in the dentine, at least in the direction of torsion when the torsion is applied.

13. Dental tool of claim 12, **characterized in that** said locking means comprise teeth (8) situated on the front face (4) of the open end segment (3).

14. Dental tool of claim 12, **characterized in that** said locking means comprise a portion of inner surface of the open end segment, this portion of inner surface exhibiting a conic shape (51d) flared toward the opening of the open end segment so as to be able to clasp an end of the object.

15. Dental tool of claim 1, **characterized in that** the determined constraint is an axial pressure.

16. Dental tool of claim 15, **characterized in that** the open end segment comprises a zone (5e) with zigzagged wall.

17. Dental tool of any one of claims 1 to 16, **characterized in that** it comprises teeth (8) located around the opening of the open end segment (3) at the front face (4) of the open end segment (3), and which may serve for boring in the dentine.

18. Dental tool of any one of claims 1 to 17, **characterized in that** it further comprises a handle (2).
